# EUROPEAN PATENT SPECIFICATION

(11) **EP 4 431 722 B1**
(45) Date of publication and mention of the grant of the patent: **02.09.2026**
(21) Application number: 23200722.9
(22) Date of filing: 29.09.2023
(51) Int. Cl.: F03B 13/18, F03B 13/20

(54) **MECHANISM PROVIDING ENERGY GENERATION FROM THE MOVEMENT OF MARINE VEHICLES**
MECHANISMUS ZUR ENERGIEERZEUGUNG AUS DER BEWEGUNG VON WASSERFAHRZEUGEN
MÉCANISME FOURNISSANT UNE GÉNÉRATION D'ÉNERGIE À PARTIR DU MOUVEMENT DE VÉHICULES MARINS

(30) Priority: 17.03.2023 TR 202303004
(43) Date of publication of application: 18.09.2024
(73) Proprietor: Atay, Resat, 34522 Istanbul (TR)
(72) Inventor: Atay, Resat, 34522 Istanbul (TR)
(74) Representative: Yamankaradeniz, Kemal

(56) References cited:
- BE-A- 405 933
- DE-U1- 20 312 348
- GB-A- 2 479 348
- PT-A- 115 694

## Description

### Technical Field

The present invention relates to the mechanism providing energy generation from the movement of marine vehicles.

In particular, the present invention relates to a mechanism that provides electrical energy to be obtained by making use of the buoyancy of the wave when anchored in boats and enables the obtained energy to be used in boat engines and batteries. The mechanism of the present invention will preferably be used effectively in boats between 10 m and 30 m. It is aimed to be used over 30 meters by making the abovementioned mechanism stronger.

### State of the Art

Today, the use of solar panels on boats can be specified as the closest application to the mechanism of the present invention. The abovementioned solar panels occupy a substantial space on boats and their installation is quite costly. Solar panels cannot be recycled and harm the environment as they are thrown away when their economic life is over. In addition to this, solar panels disrupt the dynamics and aerodynamics of the boat, especially in fast boats. This leads to more technical problems and malfunctions.

DE20312348U1 relates to a device which allows the wave energy of the sea or other waters and rumbling rivers to use as an energy source. According to DE20312348U1, as a result of torsional vibrations on a drive gear, which are the consequences the up and down movements of the hull, this can be done via coupling types in rotational energy be converted on a flywheel, which in turn via a high-speed gearbox is transmitted to a generator shaft.

As a result, due to the abovementioned disadvantages and the insufficiency of the current solutions regarding the subject matter, a development is required to be made in the relevant technical field.

### Object of the Invention

The present invention aims to solve the abovementioned disadvantages by being inspired from the current conditions.

The main object of the present invention is to reveal a mechanism that provides energy generation from the movement of marine vehicles.

Another object of the present invention is to reveal a long-lasting structure with much more cost-effectiveness compared to the state of the art.

Another object of the present invention is to reveal a mechanism that can be mounted where the anchor is tied and thus does not disturb the visuality and dynamics of the boat. Another object of the present invention is to reveal a mechanism that does not occupy much space.

Another object of the present invention is to reveal a mechanism that can be recycled at the end of its life due to the fact that it is made of steel components. In addition, renewable parts can also be used in the abovementioned mechanism.

In order to fulfill the above-mentioned objects, the present invention is a mechanism providing energy generation from the movement of marine vehicles according to claim 1.

The present invention comprises at least one battery in which the electrical energy obtained through the rotor is stored.

The structural and characteristic features of the present invention will be understood clearly by the following drawings and the detailed description made with reference to these drawings and therefore the evaluation shall be made by taking these figures and the detailed description into consideration.

### Figures Clarifying the Invention

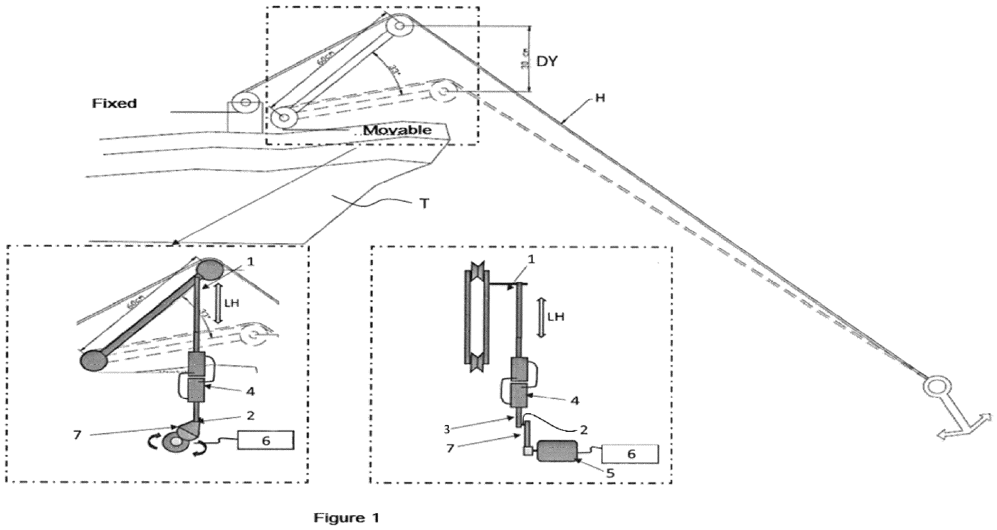

**Figure 1****,** is the representative drawing of the mechanism of the present invention (top view on the boat, the drawing showing the elements in the lower left, and the side view in the lower right are given).

### Description of the Part References

1. Movable arm
2. Joint
3. Camshaft
4. Hydraulic system
5. Rotor
6. Battery
7. Eccentric wheel

T: Boat
LH: Linear movement
H: Rope
DY: Wave height

### Detailed Description of the Invention

In this detailed description, the preferred embodiments of the mechanism is described by means of examples only for clarifying the subject matter.

The mechanism providing energy generation from the movement of marine vehicles when anchored, comprising:
- at least one movable arm (1) configured to receive an anchor chain and to move linearly in response to vertical wave motion of the anchored marine vehicle,
- at least one hydraulic system (4) directly connected to the movable arm (1), said hydraulic system (4) being configured to receive linear motion from the movable arm (1) and to convert said linear motion into controlled mechanical motion,
- at least one camshaft (3) connected to the hydraulic system (4), wherein the hydraulic system (4) transfers motion to the camshaft (3),
- at least one joint (2) connected to the camshaft (3),
- at least one eccentric wheel (7) connected to the camshaft (3) via the joint (2), said eccentric wheel (7) being configured to convert linear motion received from the camshaft (3) into continuous circular rotational motion,
- at least one rotor (5) mechanically coupled to the eccentric wheel (7) and driven thereby, said rotor (5) being configured to generate electrical energy through rotational motion,
- at least one battery (6) connected to the rotor (5) for storing the generated electrical energy.

The mechanism of the present invention is a mechanism that converts wave motion into electrical energy in a moored boat (D), and there is a system in the mechanism that rotates as it moves. There is a movable arm (1) on which the anchor chain sits on the bow in the front part of the boat (T). After each incoming wave (waves come at certain periods and the wave hits every 6 seconds on average), the movable arm (1) moves with the lifting power provided by the wave (the waves move the boat between 20 cm and 40 cm on average, depending on the roughness of the sea). As the movable arm (1) moves, it transfers the movement to the joint (2) at the other end, the joint (2) transfers it to the arm of the rotor (5) with the help of the hydraulic system (4) by rotating and moving the camshaft (3) to which it is attached. Subsequently, the rotor (5) rotates to generate electrical energy and charges the battery (6). The battery (6) transfers the stored energy to the motor.

## Claims

1. A mechanism providing energy generation from the movement of marine vehicles when anchored, **characterized by comprising:**
• at least one movable arm (1) configured to receive an anchor chain and to move linearly in response to vertical wave motion of the anchored marine vehicle,
• at least one hydraulic system (4) directly connected to the movable arm (1), said hydraulic system (4) being configured to receive linear motion from the movable arm (1) and to convert said linear motion into controlled mechanical motion,
• at least one camshaft (3) connected to the hydraulic system (4), wherein the hydraulic system (4) transfers motion to the camshaft (3),
• at least one joint (2) connected to the camshaft (3),
• at least one eccentric wheel (7) connected to the camshaft (3) via the joint (2), said eccentric wheel (7) being configured to convert linear motion received from the camshaft (3) into continuous circular rotational motion,
• at least one rotor (5) mechanically coupled to the eccentric wheel (7) and driven thereby, said rotor (5) being configured to generate electrical energy through rotational motion,
• at least one battery (6) connected to the rotor (5) for storing the generated electrical energy.

## Patentansprüche

1. Mechanismus zur Energieerzeugung aus der Bewegung von Wasserfahrzeugen, wenn sie geankert sind, **dadurch gekennzeichnet, dass er Folgendes umfasst:**
• mindestens einen beweglichen Arm (1), der dazu konfiguriert ist, eine Ankerkette aufzunehmen und sich als Reaktion auf eine vertikale Wellenbewegung des geankerten Wasserfahrzeugs linear zu bewegen,
• mindestens ein Hydrauliksystem (4), das direkt mit dem beweglichen Arm (1) verbunden ist, wobei das Hydrauliksystem (4) dazu konfiguriert ist, eine lineare Bewegung von dem beweglichen Arm (1) zu empfangen und die lineare Bewegung in eine kontrollierte mechanische Bewegung umzuwandeln,
• mindestens eine Nockenwelle (3), die mit dem Hydrauliksystem (4) verbunden ist, wobei das Hydrauliksystem (4) eine Bewegung auf die Nockenwelle (3) überträgt,
• mindestens ein Gelenk (2), das mit der Nockenwelle (3) verbunden ist,
• mindestens ein Exzenterrad (7), das über das Gelenk (2) mit der Nockenwelle (3) verbunden ist, wobei das Exzenterrad (7) dazu konfiguriert ist, eine von der Nockenwelle (3) empfangene lineare Bewegung in eine kontinuierliche kreisförmige Drehbewegung umzuwandeln,
• mindestens einen Rotor (5), der mechanisch an das Exzenterrad (7) gekoppelt ist und damit angetrieben wird, wobei der Rotor (5) dazu konfiguriert ist, elektrische Energie durch eine Drehbewegung zu erzeugen,
• mindestens eine Batterie (6), die mit dem Rotor (5) verbunden ist, um die erzeugte elektrische Energie zu speichern.

## Revendications

1. Mécanisme fournissant une génération d'énergie à partir du mouvement de véhicules marins lorsqu'ils sont ancrés, **caractérisé en ce qu'il** comprend :
• au moins un bras mobile (1) conçu pour recevoir une chaîne d'ancre et pour se déplacer linéairement en réponse au mouvement ondulatoire vertical du véhicule marin ancré,
• au moins un système hydraulique (4) directement relié au bras mobile (1), ledit système hydraulique (4) étant configuré pour recevoir un mouvement linéaire du bras mobile (1) et pour convertir ledit mouvement linéaire en un mouvement mécanique contrôlé,
• au moins un arbre à cames (3) relié au système hydraulique (4), dans lequel le système hydraulique (4) transfère le mouvement à l'arbre à cames (3),
• au moins une articulation (2) reliée à l'arbre à cames (3),
• au moins une roue excentrique (7) reliée à l'arbre à cames (3) par l'intermédiaire de l'articulation (2), ladite roue excentrique (7) étant configurée pour convertir le mouvement linéaire reçu de l'arbre à cames (3) en un mouvement de rotation circulaire continu,
• au moins un rotor (5) couplé mécaniquement à la roue excentrique (7) et entraîné par celle-ci, ledit rotor (5) étant configuré pour générer de l'énergie électrique par l'intermédiaire du mouvement de rotation,
• au moins une batterie (6) connectée au rotor (5) pour stocker l'énergie électrique générée.
